(19) Europäisches Patentamt
European Patent Office
Office européen des brevets

(11) **EP 4 174 485 A1**

(12) **EUROPEAN PATENT APPLICATION**

(43) Date of publication:
**03.05.2023 Bulletin 2023/18**

(51) International Patent Classification (IPC):
***G01N 27/30*** *(2006.01)*     ***G01N 27/401*** *(2006.01)*

(21) Application number: **21204842.5**

(22) Date of filing: **26.10.2021**

(52) Cooperative Patent Classification (CPC):
**G01N 27/301; G01N 27/401**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Russell, Timothy Howard**
**88450 Kota Kinabalu, Sabah, East Malaysia, Borneo (MY)**

(72) Inventor: **Russell, Timothy Howard**
**88450 Kota Kinabalu, Sabah, East Malaysia, Borneo (MY)**

(74) Representative: **White, Jonathan Patrick**
**JP White Intellectual Property Limited**
**25-27 Fitzwilliam Hall**
**Fitzwilliam Place**
**Dublin 2, D02 T292 (IE)**

(54) **REFERENCE ELECTRODE AND ELECTRODE ASSEMBLY**

(57) The present invention relates to a reference electrode for use with a measuring electrode for measuring ion activity in a sample solution, the reference electrode comprising: an electrode chamber for holding electrolyte, an electrode element in said electrode chamber, a tubular wall providing a physical barrier between the electrolyte and the sample solution, characterised in that at least one window is provided in the wall, whereby the window is filled with a non-porous electrochemically conductive polymer to render said window electrically conductive. The present invention provides a reference electrode configured with an electrically conductive window formed in the tubular wall that defines the electrode chamber, and this removes the need for the full body of the electrode to be electrochemically active, which in turn eliminates the formation of a salt gradient and consequential immersion errors. The invention also relates to an electrode assembly comprising a reference electrode, in which the reference electrode is combined with a measuring electrode to form a single-unit electrode assembly.

FIGURE 1

EP 4 174 485 A1

**Description**

The present invention relates to a reference electrode and electrode assembly.

Conventional reference electrodes are generally one of two types - Ag/AgCl electrodes and calomel electrodes. Reference electrodes are used together with measuring electrodes in electrochemical systems to determine the concentration of ions in a sample i.e. the pH or pX where X represents an ion. The electrical potential of the reference electrode should remain as constant as possible throughout the measuring process while the potential of the measuring electrode, which can be ion selective, is proportional to the concentration of the ion being tested in the sample. The potential of the reference electrode is kept substantially constant due to the presence of a saturated electrolyte salt bridge within the cell. The potential difference between the reference electrode and the measuring electrode is indicative of the concentration of the ion and is displayed on a millivolt instrument such as a potentiometer.

The potential of the complete electrochemical cell made up of the measuring electrode and the reference electrode can be represented by the following equation

$$E_{cell} = E_{meas} + E_{ref} + E_j$$

where $E_{meas}$ is the potential of the measuring electrode, $E_{ref}$ is the potential of the reference electrode and $E_j$ is a junction potential.

The junction potential arises from the different rates of mobility of anions and cations at the interface between two electrolytic solutions. Ideally, the junction potential of the reference electrode should have a negligible variation between solutions as otherwise the change in the junction potential will appear as an error in the overall potential calculated for the sample and hence the concentration determined.

However, the electrolyte generally leaks very slowly through openings in the reference electrode, for example at a porous plug used to seal the electrolyte inside the electrode tube, and this leakage forms a liquid junction between the salt bridge and the sample solution being tested. In certain applications, a precipitate can also form at the junction of the reference electrode and the sample solution where the electrolyte of the reference electrode flows into the sample. These precipitates can clog the opening of the reference electrode and therefore interfere with the liquid junction potential and give rise to measuring errors.

EP-A-0 624 247 A1 (Russell) describes a reference electrode for use with a measuring electrode for measuring ion activity in a sample solution. The reference electrode comprises an electrode chamber for holding electrolyte in isolation from the sample solution and an electrode element is disposed in the electrode chamber.

At least a portion of the wall of the electrode chamber is formed of wall material comprising an immobilised non-porous polymer having one or more salts of potassium, sodium and/or lithium mixed through a region of said wall material before curing of the polymer to render said region of the wall material electrically conductive. The wall provides a physical barrier between the electrolyte and the sample solution but permitting electrical communication between them.

Although the reference electrode according to EP-A-0 624 247 A1 performs well it suffers from the drawback that a salt gradient runs the length of the electrode since the full electrode body is electrochemically active, and the salt gradient results in the highest concentration of salts being at the electrode's "wet end", that is, the end of the electrode immersed in the sample solution, and the lowest concentration being at the dry end, and this causes immersion errors.

It is an object of the present invention to provide a reference electrode and electrode assembly that addresses the above problem and/or that provides the public or industry with a useful alternative.

Accordingly, there is provided a reference electrode for use with a measuring electrode for measuring ion activity in a sample solution, the reference electrode comprising:

an electrode chamber for holding electrolyte,

an electrode element in said electrode chamber,

a tubular wall providing a physical barrier between the electrolyte and the sample solution,

**characterised in that** at least one window is provided in the tubular wall, whereby the window is filled with a non-porous electrochemically conductive polymer to render said window electrically conductive.

The present invention provides a reference electrode configured with at least one electrically conductive window formed in the tubular wall that defines the electrode chamber, and this removes the need for the full body of the electrode to be electrochemically active, which in turn eliminates the formation of a salt gradient and consequential immersion errors. Restricting/limiting the active wetted surface electrochemically areas to the contact window provides error free measurements without the salt gradient found in full body electrodes.

Preferably, the at least one window is substantially circular or oval shaped.

Preferably, the at least one window extends around the circumference of the tubular wall and is substantially ring shaped.

Alternatively, at least two windows are provided in the tubular wall.

Preferably, the at least one window is provided in the lower region of the wall, being the region that is submerged in the sample solution.

Preferably, the non-porous electrochemically conductive polymer comprises a polymeric support containing dispersed salts selected from chloride, nitrate and sulphate salts of potassium, sodium and/or lithium.

The salt(s) in the window form at least part of the salt bridge of the reference electrode.

The amount of the salt(s) must be an amount effective to render the window electrically conductive, more particularly electrochemically-ionically conductive, in the region through which electrical communication with the sample solution is required.

The electrode element may be made of a metal wire, gauze mesh or leaf, especially of silver, more particularly chloridised silver wire or may be a metal structure which optionally may define at least part of one of the walls of the chamber, e.g. a metal cylinder, especially of silver or coated therewith, more particularly chloridised silver.

Preferably, the tubular wall is in the form of a tube closed at the lower end that is the end of the electrode placed in the sample solution.

Preferably, the tubular wall is made of or comprises an epoxy resin. It will be understood that the tubular body material used has to be compatible and bond to the ionically active polymeric matrix material.

Preferably, the reference electrode is combined with a measuring electrode to form a single-unit electrode assembly wherein the measuring electrode is fitted inside a tube of the tubular wall so as to define an annular chamber between them to hold electrolyte, with the measuring electrode as the radially-inner wall and the tubular wall as the radially outer wall of the chamber, and a reference electrode element is disposed in said chamber.

Preferably, the measuring electrode extends axially through the middle of the tubular wall.

Preferably, the measuring electrode comprises a tube of non-ion responsive glass of high resistance and a bulb of pH or pX responsive glass which closes the lower end of the tube.

Preferably, the tubular chamber further houses a thermo-compensator.

Preferably, the electrically conductive polymer comprises one or more salts of potassium, sodium and/or lithium to render said window electrically conductive.

Preferably, the polymer is a vinyl ester resin.

Preferably, the salt is potassium chloride and the weight ratio of vinyl ether/potassium chloride is about 48/44.

Preferably, colourants are dispersed in suitable amounts in the polymer material to render the material opaque.

In a further aspect of the invention there is provided a method of making a tube comprising a window of polymeric material suitable for use as at least part of a salt bridge of a reference electrode which method comprises the steps of:

providing a tube of non-conductive material,

forming at least window/hole in a wall of the tube,

positioning an insert member at last partially through an end of the tube to close the at least one window,

mixing one or more salts of potassium, sodium and/or lithium in powder form with an uncured polymer so as to disperse the salt(s) through the polymer to form an active material and filling the or each window with the active material while the insert member is positioned in the tube,

allowing the active material to cure and harden, and

removing the insert member from the tube.

Preferably, the tube is made of or comprises an epoxy resin.

By restricting/ limiting the active wetted surface electrochemically areas to the filled contact windows provides error free measurements without the salt gradient found in the vertically cast or centrifugally spun electrodes. The tubular body material used is selected to be compatible with and bond to the ionically active polymeric matrix material filling in the contact window or windows.

In a further aspect, there is provided a reference electrode for use with a measuring electrode for measuring ion activity in a sample solution, the reference electrode comprising:

an electrode chamber for holding electrolyte in complete isolation from the sample solution,
an electrode element in said electrode chamber,
a tubular wall providing a physical barrier between the electrolyte and the sample solution,
**characterised in that** an annular ring is provided in the tubular wall, whereby at least a portion of the annular ring is made with a non-porous electrochemically conductive polymer to render said portion of the annular ring electrically conductive.

Preferably, the annular ring is integrally formed with the tubular wall.

Preferably, the reference electrode comprising an annular ring formed in the tubular wall is combined with a measuring electrode to form a single-unit electrode assembly wherein the measuring electrode is fitted inside a tube of the tubular wall so as to define an annular chamber between them to hold electrolyte, with the measuring electrode as the radially-inner wall and the tubular wall as the radially outer wall of the chamber, and a reference electrode element disposed in said chamber and the electrically conductive annular ring is in the annular chamber.

In a still further aspect, there is provided a reference electrode for use with a measuring electrode for measuring ion activity in a sample solution, the reference electrode comprising:

an electrode chamber for holding electrolyte in complete isolation from the sample solution,
an electrode element in said electrode chamber,
a tubular wall providing a physical barrier between the electrolyte and the sample solution,
**characterised in that** an annular cylinder is disposed in the electrode chamber, whereby at least a portion of the annular cylinder is made with a non-porous electrochemically conductive polymer to render said portion of the annular cylinder electrically conductive.

Preferably, the reference electrode comprising an annular cylinder is combined with a measuring electrode to form a single-unit electrode assembly wherein the measuring electrode is fitted inside a tube of the tubular wall so as to define an annular chamber between them to hold electrolyte, with the measuring electrode as the radially-inner wall and the tubular wall as the radially outer wall of the chamber, and a reference electrode element is disposed in said chamber and the electrically conductive annular cylinder is disposed in the annular chamber.

Preferably, the electrode assembly comprises stabilising feet at the lower/wet end thereof.

The invention will be more clearly understood from the following description of some embodiments thereof, given by way of example only, with reference to the accompanying drawings, in which:

Figure 1 is a diagrammatic longitudinal cross section of one embodiment of a reference electrode according to the invention,

Figure 2 is a diagrammatic longitudinal cross section of a combined reference electrode/measuring electrode assembly according to the invention,

Figure 3 is a diagrammatic longitudinal cross section of a combined reference electrode/measuring electrode assembly also combined with a thermo-compensator according to the invention,

Figure 4 is a diagrammatic longitudinal cross section of a further embodiment of a combined reference electrode/measuring electrode assembly according to the invention,

Figure 5 is a diagrammatic longitudinal cross section of a still further embodiment of a combined reference electrode/measuring electrode assembly according to the invention, and

Figures 6 to 12 are diagrammatic views showing steps in a method of forming a tube comprising a window of polymeric material suitable for use as at least part of a salt bridge of a reference electrode according to the invention shown in Figures 1 to 3.

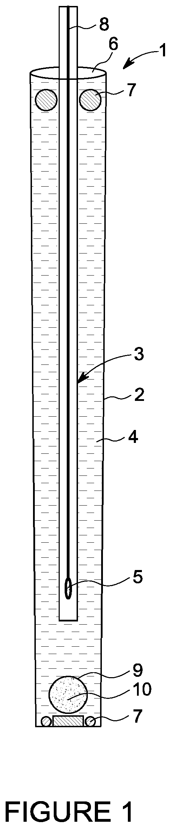

As shown in Figure 1, a reference electrode 1, indicated generally by the reference numeral 1, for use with a measuring electrode for measuring ion activity in a sample solution, comprises a tubular wall 2 having a closed end and defining an electrode chamber, indicated generally by the reference numeral 3, for holding electrolyte 4 in isolation from the sample solution.

An electrode element 5 is disposed in the electrode chamber 3 and is fully immersed in the electrolyte 4. The electrode element 5 is suitably a galvanically chloridised silver wire, while the electrolyte is suitably a KCl solution (e.g. at about 2.7 M), or a gel of hydroxyethyl-cellulose mixed with KCl. Because silver chloride is highly soluble in a concentrated solution of potassium chloride, the electrolyte solution 4 should be saturated with silver chloride to avoid removal of silver chloride from the electrode element wire 5.

The electrode element 5 may be made of a metal wire, gauze mesh or leaf, especially of silver, more particularly chloridised silver wire or may be a metal structure which optionally may define at least part of one of the walls of the chamber, e.g. a metal cylinder, especially of silver or coated therewith, more particularly chloridised silver.

At the top of the tube 2, the electrode element 5 is joined to a plug which seals a glass tube 6 and O-ring seals 7 are provided around the glass tube 6 to seal the electrolyte 4 in the chamber 3. A length of wire 8 connects the electrode 1 to a coaxial cable which leads to a measuring instrument.

As shown, at least one window 9 is provided in the tubular wall 2, whereby the window 9 is filled with a non-porous electrochemically conductive polymer 10 to render said window 9 electrically conductive. It will be understood that the window 9 is provided in a region of the tubular wall 2 that is submerged in the sample solution, accordingly the window is formed in the lower portion or desired "wet end" of the electrode 1.

The non-porous electrochemically conductive polymer 10 comprises a polymeric support containing dispersed salts selected from chloride, nitrate and sulphate salts of potassium, sodium and/or lithium. It will be understood that the amount of the salt(s) must be an amount effective to render the window 9 electrically conductive, more particularly electrochemically-ionically conductive, in the region through which electrical communication with the sample solution is required.

The electrolyte 4 in the chamber 2 is thus completely isolated from the sample solution but is in electrical communication therewith because of the salt in the filling material 10 of the window 9. The salt(s) in the window 9 form at least part of the salt bridge of the reference electrode 1. The electrically conductive window 9 formed in the tubular wall 2 that defines the electrode chamber 3 removes the need for the full body of the electrode 1 to be electrochemically active, which in turn eliminates the formation of a salt gradient and consequential immersion errors.

The window 9 as shown is substantially circular shaped although it will be understood that the window 9 may be shaped and dimensioned in the tube 2 as required or as desired. For example, the window may be oval or square shaped. The window 9 may also optionally extend fully around a portion of the tubular wall 2 to define a substantially circumferential ring-shaped window 9 formed integrally in the tubular wall 2.

Alternatively, at least two or more windows 9 filled with a non-porous electrochemically conductive polymer 10 to render said windows 9 electrically conductive are provided in the tubular wall 2.

The acceptable impedance across the barrier provided by the window 9 filled with the non-porous electrochemically conductive polymer 10 is between 20-80K Ohms since this is typically compatible with most measuring instruments.

The tubular wall 2 is preferably made of a polymer with good electrical insulation properties, e.g. vinyl ester resins, polyesters, polyethylene, polypropylene, polyvinyl chloride or epoxy resins. The vinyl ester resins are preferred because of their chemical resistance. It will be understood that the tubular body wall material used has to be compatible and bond with the ionically active polymeric material filling used in the contact window(s) provided as a circle/oval/polygonal or annular ring shape in the tubular wall.

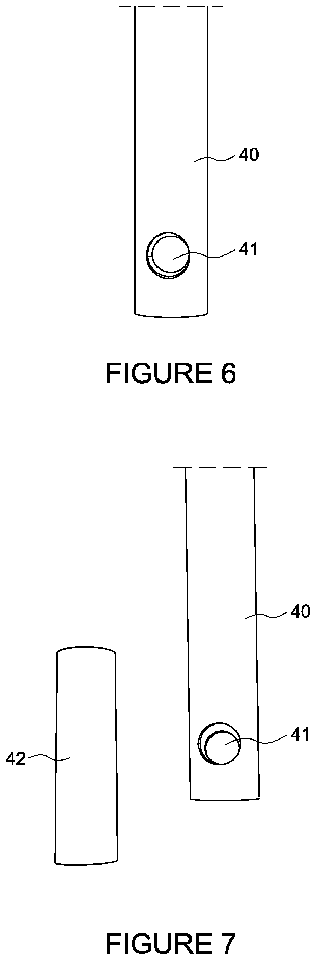

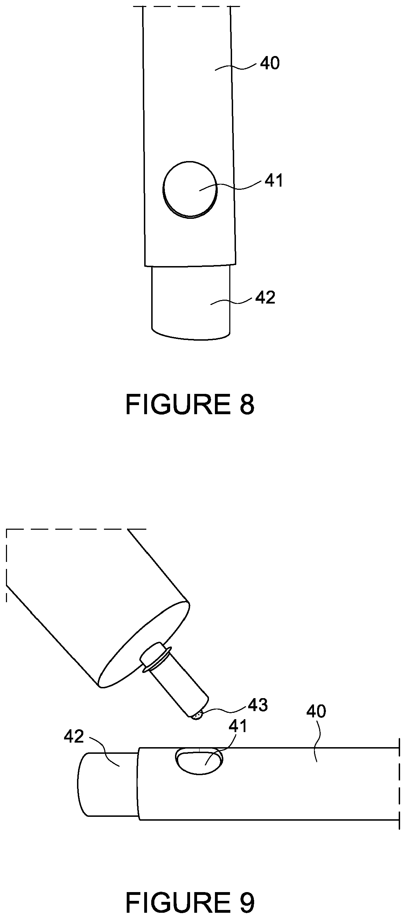

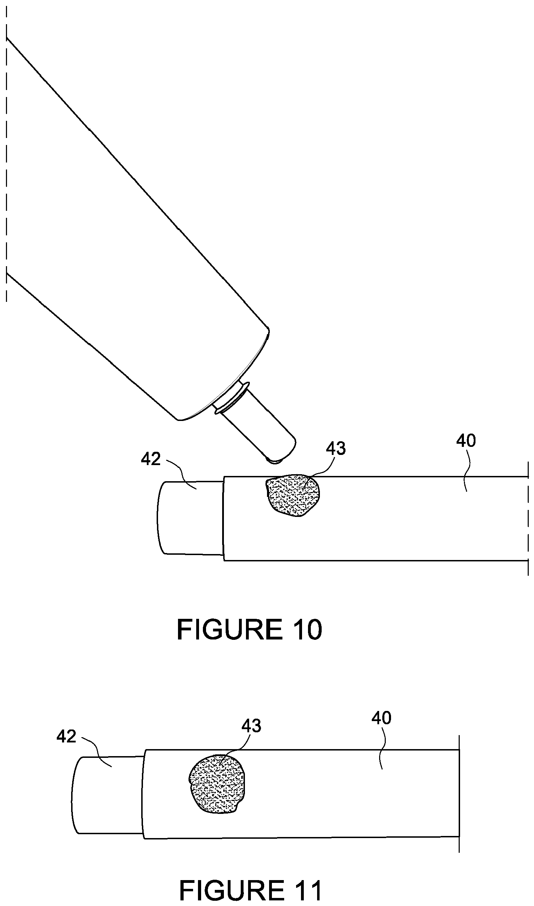

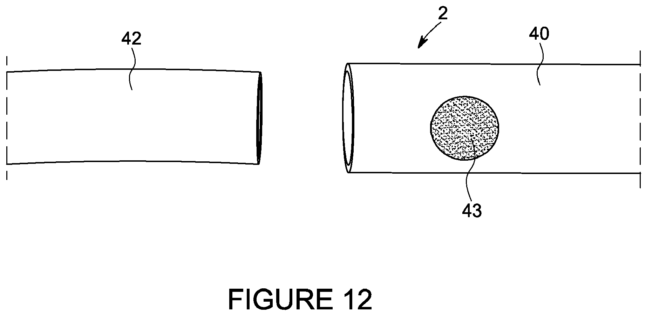

Turning to Figures 6 to 12, there is also provided a method of making a tube 2 comprising a window 9 of polymeric material 10 suitable for use as at least part of a salt bridge of a reference electrode 1. As shown in Figure 7, the method comprises a step of providing a tube 40 of non-conductive material and forming at least one window 41 in a wall of the tube 40. In the instance shown, a pair of window holes 41 have been formed in the tube 40. As shown in Figure 8, an insert member 42, such as a cylindrically shaped core of a nonreactive material is provided and, as shown in Figure 9, is positioned at last partially through an end of the tube 40 to close the windows 41. The method also includes mixing one or more salts of potassium, sodium and/or lithium in powder form with an uncured polymer so as to disperse the salt(s) through the polymer to form an active material or filling 43, as detailed above, and as shown in Figure 10, each window 41 is then filled with the active material 43 while the insert member 42 is positioned in the tube 40 and the active material 43 is allowed to cure and harden. It will be understood that the tubular body material used has to be compatible and bond with the ionically active polymeric matrix material in the contact window(s) provided as a circle/oval/polygonal or annular ring shape.

Finally, the insert member 42 is removed from the tube 40.

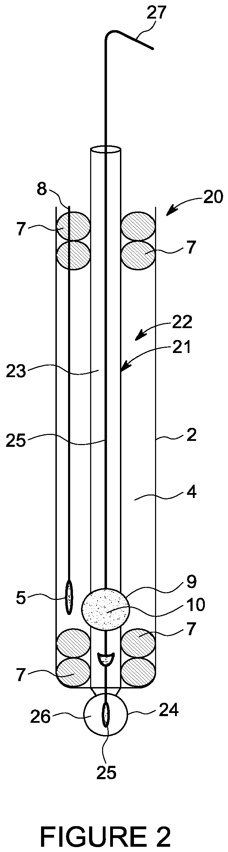

Shown in Figure 2 is a combined reference electrode/measuring electrode assembly 20 which has a measuring electrode, indicated generally by the reference numeral 21, extending axially through the middle.

In the instance shown, the reference electrode 1 is combined with the measuring electrode 21 to form a single-unit electrode assembly 20 wherein the measuring electrode 21 is fitted inside a tube of the tubular wall 2 so as to define an annular chamber 22 between them to hold electrolyte 4, with the measuring electrode 21 as the radially-inner wall and the tubular wall 2 as the radially outer wall of the chamber 22, and the electrode element 5 is disposed in said annular chamber 22.

The measuring electrode 21 comprises a tube 23 of non-ion responsive glass of high resistance and a bulb 24 of pH or pX responsive glass which closes the lower end of the tube 23. A conventional Ag/AgCl electrode wire 25 is housed inside the tube 23 and bulb 24 and is and immersed in a conventional pH buffer filling solution 26.

Radially outwardly of the measuring electrode 21 there is an annular chamber 22 which houses the reference electrode wire 5 (e.g. an Ag/AgCl electrode) immersed in the electrolyte e.g. a KCl electrolyte as described with respect to Figure 1, saturated with AgCl.

As shown, the inner perimeter of the chamber 22 is defined by the tube 23 of the measuring electrode 21, while the outer perimeter of the chamber 22 is defined by a tube 2 of the reference electrode. Double 0-ring seals 7 are provided at the top and bottom of the chamber 22, sealing against the tubes 2, 23. Electrode wires 8 and 27 are connected from the top of the assembly through a millivolt measuring instrument.

When the electrode assembly of Figure 2 is immersed in a sample solution, the electrolyte in chamber 22 is completely isolated from the sample solution by the tube 23 and the 0-ring seals 7 but is in electrical communication therewith because of the salt in the filling material 10 of the at least one window 9 formed in the tubular wall 2, the salt(s) in the window 9 form at least part of the salt bridge of the reference electrode 1.

A gap about 3mm is provided between the window 9 formed in the tube 2 and the measuring electrode 21 to avoid a short circuit and ensure insulation resistance between the two half cells 1, 21. Note that the O-ring seals 7 made of silicone also further ensure sealing separation of the two half cells 1, 21.

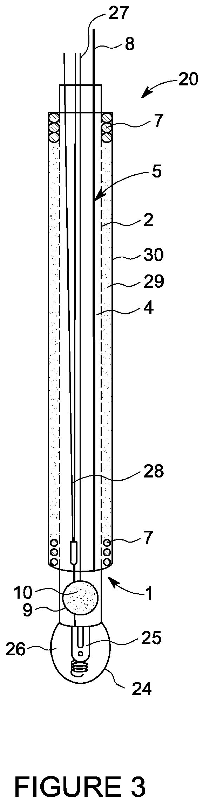

Figure 3 shows the combined reference electrode/measuring electrode assembly 20 of Figure 2 combined with a thermo-compensator 28 provided in a further chamber 29 defined between an outer glass tube 30 and the tubular wall 2.

In the instance shown, the reference electrode 1 is the radially inner wall and the outer glass tube 30 is the radially outer wall of the chamber 29. The outer chamber 29 is filled with acid washed dried sand for better heat conductance and the thermo-compensator 28 is disposed in the sand within the chamber 29. The thermo-compensator 28 is made up of a first pole and a second pole which are connected to a measuring instrument. Triple 0-ring seals 7 are provided at the top and bottom of the chamber 29.

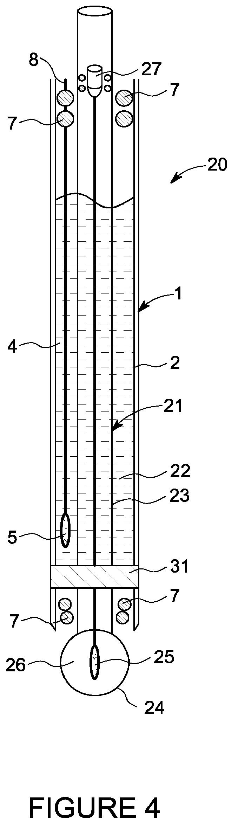

Figure 4 shows a combined reference electrode/measuring electrode assembly 20 similar to Figure 2 in which an annular ring 31 forms a portion of the tubular wall 2, whereby at least a portion of the annular ring 31 is made with the non-porous electrochemically conductive polymer filling 10 to render said portion of the annular ring 31 electrically conductive.

A gap of about 3mm is also provided between the annular ring 31 formed in the tubular wall 2 and the measuring electrode 21 to avoid a short circuit and ensure insulation resistance between the two half cells 1, 21.

Note that the O-ring seals 7 made of silicone also further ensure sealing separation of the two half cells 1, 21. Use of the annular ring 31 limits the contact of the electrolyte 4 to the inner surface of the ring only (360°) to eliminate the immersion errors due to the KCl salt gradient.

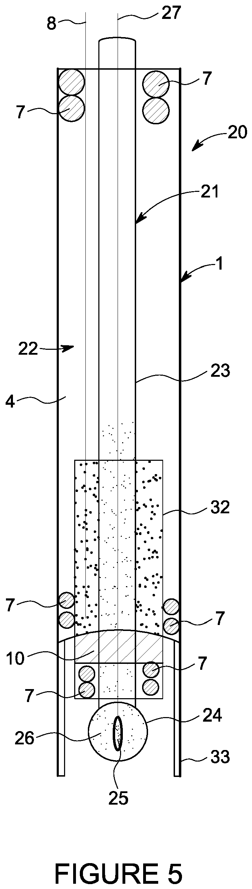

Figure 5 shows a combined reference electrode/measuring electrode assembly 20 similar to Figure 2 in which an annular cylinder 32 is disposed in the electrode chamber 3, whereby at least a portion of the annular cylinder 32 is made with a non-porous electrochemically conductive polymer filling 10 to render said portion of the annular cylinder 32 electrically conductive. The annular cylinder 32 is sealed into the electrode tubular wall 2 by O-rings 7, and in the instance shown, has dimensions of: outer diameter 9mm, inner diameter 6mm, and length 5mm, although it will be understood that the dimensions may be configured as required or as desired.

Stabilising feet 33 are also optionally provided at the wet end of the electrode assembly 20.

It is to be understood that the invention is not limited to the specific details described herein which are given by way of example only and that various modifications and alterations are possible without departing from the scope of the invention as defined in the appended claims.

**Claims**

1. A reference electrode for use with a measuring electrode for measuring ion activity in a sample solution, the reference electrode comprising:

   an electrode chamber for holding electrolyte,
   an electrode element in said electrode chamber,
   a tubular wall providing a physical barrier between the electrolyte and the sample solution, **characterised in that** at least one window is provided in the wall, whereby the window is filled with a non-porous electrochemically conductive polymer to render said window electrically conductive.

2. A reference electrode as claimed in Claim 1, in which the at least one window is substantially circular or oval shaped.

3. A reference electrode as claimed in Claim 1 or Claim 2, in which at least two windows are provided in the tubular wall and each window is filled with a non-porous electrochemically conductive polymer to render said windows electrically conductive.

4. A reference electrode as claimed in Claim 1, in which the at least one window extends around a circumference of the tubular wall and is substantially ring shaped, whereby at least a portion of the annular ring is made with a non-porous electrochemically conductive polymer to render said portion of the annular ring electrically conductive.

5. A reference electrode as claimed in any one of the preceding claims, in which the at least one window is provided in a region of the wall that is submerged in the sample solution.

6. A reference electrode as claimed in any one of the preceding claims, in which the tubular wall is made of epoxy resin.

7. A reference electrode as claimed in any one of the preceding claims, in which the electrically conductive polymer comprises one or more salts of potassium, sodium and/or lithium to render said window electrically conductive.

8. A reference electrode as claimed in any one of the preceding claims, in which the electrically conductive polymer is a vinyl ester resin.

9. A reference electrode as claimed in Claim 7 or Claim 8, in which the salt is potassium chloride and the weight ratio of vinyl ether/potassium chloride is about 48/44.

10. An electrode assembly comprising a reference electrode as claimed in any one of the preceding claims, in which the reference electrode is combined with a measuring electrode to form a single-unit electrode assembly wherein the measuring electrode is fitted inside a tube of the tubular wall so as to define an annular chamber between them to hold electrolyte, with the measuring electrode as the radially-inner wall and the tubular wall as the radially outer wall of the chamber, and a reference electrode element disposed in said chamber.

11. An electrode assembly as claimed in Claim 7, in which the measuring electrode extends axially through the middle of the tubular wall.

**12.** An electrode assembly as claimed in Claim 7 or Claim 8, in which the measuring electrode comprises a tube of non-ion responsive glass of high resistance and a bulb of pH or pX responsive glass which closes the lower end of the tube.

**13.** An electrode assembly as claimed in any one of Claims 7 to 9, comprising a further outer chamber filled with acid washed dried sand and a thermo-compensator is disposed in the sand within the outer chamber.

**14.** An electrode assembly as claimed in any one of Claims 7 to 10, in which the electrode assembly comprises stabilising feet at the lower/wet end thereof.

**15.** A method of making a tube comprising at least one window of polymeric material suitable for use as at least part of a salt bridge of the reference electrode of Claim 1, the method comprising steps of:

providing a tube of non-conductive material,
forming at least one window in a wall of the tube,
positioning an insert member at last partially through an end of the tube to close the at least one hole,
mixing one or more salts of potassium, sodium and/or lithium in powder form with an uncured polymer so as to disperse the salt(s) through the polymer to form an active material and filling the or each hole with the active material while the insert member is positioned in the tube,
allowing the active material to cure and harden, and
removing the insert member from the tube.

FIGURE 1

FIGURE 2

FIGURE 3

**FIGURE 4**

FIGURE 5

## FIGURE 6

## FIGURE 7

FIGURE 8

FIGURE 9

42    43    40

**FIGURE 10**

42    43    40

**FIGURE 11**

42

2

40

43

FIGURE 12

Europäisches
Patentamt

European
Patent Office

Office européen
des brevets

## EUROPEAN SEARCH REPORT

**Application Number**

EP 21 20 4842

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 422 192 A1 (RUSSELL TIMOTHY [GB]) 29 February 2012 (2012-02-29) * paragraphs [0011] - [0012], [0022] - [0027], [0033] - [0053]; claims 1-13; figures 1-3 * | 1-12,15 | INV. G01N27/30 G01N27/401 |
| X | US 2020/110052 A1 (HUO JINSHAN [US] ET AL) 9 April 2020 (2020-04-09) * paragraphs [0006] - [0007], [0018] - [0051]; figures 1-5 * | 1-3,5, 10-12,14 | |
| X,D | EP 0 624 247 A1 (AMAGRUSS LTD [IE]) 17 November 1994 (1994-11-17) * paragraphs [0011] - [0031], [0034] - [0056]; figures 1-10 * | 1,5-14 | |
| X | US 4 774 029 A (POULIN ALBERT D [US]) 27 September 1988 (1988-09-27) * column 1, line 47 - column 4, line 65; figure 1 * | 1,2,5 | |

TECHNICAL FIELDS SEARCHED (IPC)

G01N

The present search report has been drawn up for all claims

| Place of search | Date of completion of the search | Examiner |
|---|---|---|
| Munich | 5 April 2022 | Lazar, Zala |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 21 20 4842**

This annex lists the patent family members relating to the patent documents cited in the above-mentioned European search report.
The members are as contained in the European Patent Office EDP file on
The European Patent Office is in no way liable for these particulars which are merely given for the purpose of information.

**05-04-2022**

| Patent document cited in search report | | | Publication date | Patent family member(s) | | | Publication date |
|---|---|---|---|---|---|---|---|
| EP 2422192 | A1 | | 29-02-2012 | EP | 2422192 | A1 | 29-02-2012 |
| | | | | GB | 2469650 | A | 27-10-2010 |
| | | | | US | 2012098544 | A1 | 26-04-2012 |
| | | | | WO | 2010122318 | A1 | 28-10-2010 |
| US 2020110052 | A1 | | 09-04-2020 | CN | 111007130 | A | 14-04-2020 |
| | | | | DE | 102019125151 | A1 | 09-04-2020 |
| | | | | US | 2020110052 | A1 | 09-04-2020 |
| EP 0624247 | A1 | | 17-11-1994 | AT | 179796 | T | 15-05-1999 |
| | | | | AU | 3366093 | A | 01-09-1993 |
| | | | | CA | 2128888 | A1 | 05-08-1993 |
| | | | | DE | 69324795 | T2 | 13-01-2000 |
| | | | | EP | 0624247 | A1 | 17-11-1994 |
| | | | | WO | 9315393 | A1 | 05-08-1993 |
| US 4774029 | A | | 27-09-1988 | NONE | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0624247 A